# EUROPÄISCHE PATENTSCHRIFT

(11) **EP 3 321 001 B1**
(45) Veröffentlichungstag und Bekanntmachung des Hinweises auf die Patenterteilung: **14.08.2019**
(21) Anmeldenummer: 17201041.5
(22) Anmeldetag: 10.11.2017
(51) Int. Cl.: B22F 1/00, B22F 3/105, C22C 1/05, C22C 32/00, B23K 26/342, C22C 19/05

(54) **WERKSTOFF SOWIE VERWENDUNG EINES SOLCHEN**
MATERIAL AND USE OF SAME
MATÉRIAU AINSI QU'UTILISATION D'UN TEL MATÉRIAU

(30) Priorität: 10.11.2016 DE 102016121531
(43) Veröffentlichungstag der Anmeldung: 16.05.2018
(73) Patentinhaber: Voestalpine Böhler Welding UTP Maintenance GmbH, 79189 Bad Krozingen (DE)
(72) Erfinder: Bürger, Mike, 89155 Erbach (DE); Kröschel, Rolf, 79206 Breisach (DE)
(74) Vertreter: Stoffregen, Hans-Herbert

(56) Entgegenhaltungen:
- EP-A1- 1 857 204
- US-A1- 2014 271 319
- US-A1- 2014 360 788

## Beschreibung

Die Erfindung bezieht sich auf einen Werkstoff enthaltend ein erstes sowie ein zweites Pulver. Auch nimmt die Erfindung Bezug auf die Verwendung des Werkstoffes.

Gegenstand der Erfindung ist auch ein Verfahren zum Auftragen eines Werkstoffs auf ein Objekt bzw. zum Herstellen eines solchen.

Es sind Metallpulver auf Basis einer Nickellegierung bekannt, die für Plasma-Pulver-Auftragschweißverfahren zum Einsatz gelangen. Plasma-Pulver-Auftragschweißverfahren (PTA/PPA) werden vorrangig zum Auftragschweißen von verschleiß- und korrosionsbeständigen Schichten auf ein Grundmaterial eingesetzt. Das Verfahren zeichnet sich durch zwei getrennt voneinander regelbare Lichtbögen aus. Ein Lichtbogen - der Pilotlichtbogen - brennt zwischen einer nicht abschmelzenden z.B. aus Wolfram bestehenden Elektrode und der Plasmadüse. Hierdurch wird das Plasmagas beschleunigt und das Zünden des zur Übertragung benötigten Hauptlichtbogens ermöglicht. Letzterer brennt mit hoher Energiedichte zwischen der Elektrode und dem Werkstück. Mit Hilfe des Lichtbogens wird sowohl der Grundwerkstoff als auch das Metallpulver, das als Schweißzusatz dient, aufgeschmolzen, um die aufzutragende Schutzschicht zu bilden. Als Schweißzusatz dient, aufgeschmolzen, um die aufzutragende Schutzschicht zu bilden. Als Prozessgase werden z.B. Argon, Wasserstoff, Helium bzw. Gasgemische benutzt. Diese dienen zum einen als Plasmagas und zum anderen als Schutzgas und als Trägergas für das Pulver.

Bisher bekannte Metallpulver auf Nickel-Basis wie NiCrBSi zeichnen sich dadurch aus, dass sie eine hohe Verschleißbeständigkeit aufweisen. Allerdings sind häufig Nachteile bezüglich Korrosionsbeständigkeit und Schlagfestigkeit gegeben. Zur Erhöhung der Verschleißbeständigkeit ist es bekannt, Metallpulver aus einer NiCrBSi-Matrix mit Wolframkarbiden zu mischen (NiCrBsiWSC60).

Ein von der Anmelderin stammendes für Plasma-Pulver-Auftragschweißen bestimmtes Metallpulver der Bezeichnung "PLASweld NiBas 776" mit der chemischen Zusammensetzung NiCrMoW ist für korrosions- und hochtemperaturbeständige Auftragungen geeignet wie für Warmarbeitswerkzeuge wie Schmiedehämmer und -sättel und Pufferschichten und zeigt eine hohe Korrosions- und Hochtemperaturbeständigkeit.

Aus der EP 0 818 549 B1 ist ein Werkstoff in Pulver- oder Drahtform auf Nickelbasis für eine Beschichtung bekannt, die eine hohe Korrosions- und Verschleißbeständigkeit aufweisen soll. Der Werkstoff weist einen Kohlenstoffanteil zwischen 0,01 und 0,05 Gew.- % und einen Siliziumanteil zwischen 4,0 und 6,5 Gew.-% auf.

In der DE 2 044 208 A1 wird ein Schweißstab für Autogenschweißungen, insbesondere auch für die elektrische Lichtbogenschweißungen beschrieben, der 10 bis 80% Metallanteil und 90 bis 20% hochschmelzende Wolframkarbide enthält.

Ein Nickel-basiertes nicht magnetisches Pulver zum Auftragen auf einen Bohrstrang ist aus der WO 2012/103494 A2 bekannt. Mehrere unterschiedliche Zusammensetzungen wie z.B. Boranteile zwischen 1 und 4 Gew.-%, Siliziumanteile zwischen 2 und 5 % oder Chromanteilen zwischen 20 und 23 Gew.-% gelangen zum Einsatz.

Die US 2004/0060742 A1 bezieht sich auf eine Bohrkrone und weist Bohrkörper auf, die aus Wolframkarbid mit einem Gewichtsanteil zwischen 45 und 85 % und einem Metallpulver bestehen, wobei geeignete Metalle Übergangsmetalle, Hauptgruppenmetalle und Legierungen dieser sind.

Gegenstande der WO 2015/030879 A2 ist ein additives Herstellungsverfahren, bei dem eine Mischung aus Wolframkarbid enthaltendem Keramikpulver sowie Metallpulver verwendet wird.

Die CN 105458256 A bezieht sich auf ein additives Herstellungsverfahren unter Verwendung eines Pulvers mit Wolframkarbid und eines Pulvers auf Nickel-Basis.

Der EP 1 857 204 A1 ist ein Werkstoff in Form eines Mischpulvers, das ein erstes Pulver auf Nickel-Basis enthaltend in Gew.-% des Werkstoffs 0-0.7 C, 0-4.0 Si, 0-2.0 Mn, 0-10.0 Fe, 11.0-30.0 Cr, 5.0-25.0 Mo, 0-5.0 W, 0-0.5 V, 0-5.0 Cu und 0-5.0 B und ein zweites Pulver enthaltend Wolframkarbid, wobei Anteil des zweiten Pulvers 30 % bis 65 Gew.-% des Werkstoffs beträgt. Ein ähnlicher Werkstoff ist der US 2014/360788 A1 zu entnehmen.

Die US 2014/271319 A1 offenbart einen Werkstoff in Form eines Mischpulvers, das ein erstes Pulver auf Nickel-Basis enthaltend in Gew.-% des Werkstoffs 1.0-3.0 C, 0-0.7 Si, 0-1.0 Mn, 31.0-35.0 Cr, 16-20 Mo, und 1.5-3.5 B und ein zweites Pulver enthaltend Wolframkarbid, wobei der Anteil des zweiten Pulvers 20 Gew.-% des Werkstoffs beträgt.

Der vorliegenden Erfindung liegt die Aufgabe zugrunde, einen insbesondere für ein Auftragschweißverfahren geeigneten Werkstoff zur Verfügung zu stellen, der sowohl eine hohe Temperaturbeständigkeit als auch eine hohe Korrosions- und Verschleißbeständigkeit bietet. Gleichzeitig soll der Vorteil gegeben sein, Schichten gewünschter Dicke, also auch sehr dünne und dicke Schichten aufzutragen.

Zur Lösung eines oder mehrerer zuvor angegebener Aspekte sieht die Erfindung vor einen Werkstoff in Form eines Mischpulvers, das ein erstes Pulver auf Nickel-Basis enthaltend C, Si, Mn, Fe, Cr, Mo, W, V, Ni und ein zweites Pulver enthaltend Wolframkarbid enthält, wobei der Anteil des ersten Pulvers 55 % bis 85 Gew.-% des Werkstoffs beträgt. Insbesondere zeichnet sich die Erfindung dadurch aus, dass das erste Pulver in Gew.-% des Werkstoffs enthält oder besteht aus

| | |
|---|---|
| C | 0,06 bis 0,20 |
| Si | < 0,8, insbesondere 0 < Si < 0,8,# |
| Mn | 0,5 bis 1,5 |
| Fe | 2,0 bis 3,8 |
| Cr | 14,0 bis 17,0 |
| Mo | 14,0 bis 18,0 |
| W | 3,0 bis 5,5 |
| V | 0,1 bis 0,8 |
| Ni | Rest |
| Cu | < 0,1 |
| B | < 0,05 |
| andere | < 0,5 |

und das zweite Pulver in Gew.-% des Werkstoffs enthält oder besteht aus Wolframkarbid mit

| | |
|---|---|
| C | 3,5 bis 4,5 |
| Fe | < 0,3 |
| W | Rest |
| andere | < 0,5. |

Vorzugsweise ist vorgesehen, dass der Werkstoff aus dem ersten und dem zweiten Pulver besteht, wobei insbesondere vorgeschlagen wird, dass das erste Pulver auf Nickel-Basis aus den Bestandteilen C, Si, Mn, Fe, Cr, Mo, W, V, Ni und das zweite Pulver aus Wolframkarbiden mit den Bestandteilen C, Fe, W besteht.

Erfindungsgemäß wird ein Metallmischpulver mit Wolframkarbid vorgeschlagen, das sich durch eine hohe Temperaturbeständigkeit - insbesondere durch die Bestandteile W, Mo, Cr bedingt - sowie hohe Korrosions- und Verschleißbeständigkeit auszeichnet. Gleichzeitig ergibt sich der Vorteil, dass überaus dünne Schichten, und auch dicke Bauteilgeometrien (3D) insbesondere durch Laserauftragschweißen in 3D-Druckverfahren, hergestellt werden können.

Beim Laser-Pulver-Auftragschweißen dient ein Laser als Wärmequelle zum Anschmelzen der Werkstückoberfläche und Aufschmelzen des pulverförmigen Schweißzusatzes. Der energiereiche Fokus des Lasers erlaubt punktgenaue Auftragung, was den Verschleißschutz an definierten Stellen ermöglicht, ohne die Eigenschaften des restlichen Bauteils negativ zu beeinflussen.

Weiterhin besteht die Möglichkeit, den Werkstoff für ein additives Herstellungsverfahren einzusetzen.

Selbstverständlich ist der Werkstoff auch für übliches Plasma-Pulver-Auftragschweißen geeignet.

Insbesondere zeichnet sich der Werkstoff dadurch aus, dass dieser eine Zusammensetzung in Gew.-% wie folgt aufweist:

| | |
|---|---|
| C | 1,6 |
| Si | 0,4 |
| Mn | 0,7 |
| Fe | 1,8 |
| Cr | 9,6 |
| Mo | 9,7 |
| W | 41,1 |
| V | 0,4 |
| Ni | 34,7 |

Die Körnung des Werkstoffs sollte dann, wenn ein Einsatz für das Plasma-Pulver-Auftragschweißen erfolgt, zwischen 60µm und 180µm, insbesondere zwischen 50µm und 150µm, liegen.

Erfolgt eine Verwendung für ein Laser-Pulver-Auftragschweißen, so sollte die Körnung bevorzugterweise kleiner sein, insbesondere im Bereich von 45µm und 125µm.

Beim Einsatz bei einem additiven Verfahren sollte die bevorzugte Korngröße zwischen 15µm und 90µm liegen.

Die Erfindung zeichnet sich insbesondere auch dadurch aus, dass der Werkstoff zuvor beschriebener Charakterisierung zum Auftragschweißen, insbesondere Plasma-Pulver-Auftragschweißen oder Laser-Pulver-Auftragschweißen, verwendet wird.

Eine Verwendung des Werkstoffs zur Herstellung eines Objektes mittels eines additiven Verfahrens, insbesondere Laserschmelz-Verfahrens, ist gleichfalls möglich.

Eine additive Fertigung bezeichnet einen Prozess, bei dem auf der Basis von digitalen 3D-Konstruktionsdaten durch das Ablagern von Material schichtweise ein Bauteil aufgebaut wird. "3D-Druck" wird dabei als Synonym für eine entsprechende Fertigung verwendet.

Daher zeichnet sich die Erfindung auch durch ein Verfahren zur Herstellung eines Bauteils durch schichtweises Aufbauen aus dem Werkstoff zuvor beschriebener Art aus, wobei nacheinander mehrere Pulverschichten übereinander aufgebracht und jede Pulverschicht vor dem Aufbringen der nächstfolgenden Pulverschicht mit einem fokussierten Laserstrahl in einem vorgegebenen Bereich, der einem ausgewählten Querschnittsbereich des herzustellenden Objekts entspricht, auf eine vorgegebene Temperatur derart erhitzt wird, dass die Pulverschicht an der darunterliegenden Pulverschicht durch Aufschmelzen der Pulverschicht und/oder Sintern fixiert wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus den nachfolgenden Ausführungsbeispiel.

Es wurde ein Mischpulver hergestellt, das sich aus einem Matrixpulver bestehend aus 0,1 Gew.-% Kohlenstoff, 0,7 Gew.-% Silizium, 1,2 Gew.-% Mangan, 3,0 Gew.-% Eisen, 16 Gew.-% Chrom, 16 Gew.-% Molybdän, 4,5 Gew.-% Wolfram, 0,6 Gew.-% Vanadium und 57,9 Gew.-% Nickel sowie Wolframkarbiden mit 3,9 Gew.-% Kohlenstoff, 0,1 Gew.-% Eisen, 96 Gew.-% Wolfram zusammensetzt.

Das Mischpulver wurde aus dem Matrixpulver und den Wolframkarbiden derart gemischt, dass der Gewichtsanteil des Matrixpulvers 60 Gew.-% und das der Wolframkarbide 40 Gew.-% betrug.

Es ergab sich somit eine Mischpulverzusammensetzung in Gewichtsprozent wie folgt:

| | |
|---|---|
| C | 1,6 |
| Si | 0,4 |
| Mn | 0,7 |
| Fe | 1,8 |
| Cr | 9,6 |
| Mo | 9,7 |
| W | 41,1 |
| V | 0,4 |
| Ni | 34,7 |

Eine Schicht eines entsprechenden Mischpulver wurde auf einen Metallkörper durch Plasma-Pulver-Auftragschweißen aufgetragen, gegen die sodann eine rotierende Scheibe aus Stahl gedrückt wurde, um eine Reibradverschleißprüfung durchzuführen.

Das Prüfrad aus C35 Stahl (Durchmesser 168 mm, 10 mm breite Schleiffläche) wurde 3000 Umdrehungen dem Test unterzogen. Schleifmittel mit der Korngröße F80, 1850 g Einwaage-Schleifmittel mit 500 ml Wasser gelangen zum Einsatz.

In einem Parallelversuch wurde auf einen entsprechenden Träger durch Plasma-Pulver-Auftragschweißen ein Wolframkarbid enthaltendes Metallpulver, das unter der Bezeichnung NiCrBSiWSC60 (Wolframschmelzkarbid) angeboten wird, aufgetragen, um ebenfalls den Verschleiß durch das Reibrad zu ermitteln.

Der Volumenverschleiß des erfindungsgemäßen Mischpulvers betrug 28,28 mm³, wohingegen sich der Volumenverschleiß bei dem vorbekannten Mischpulver auf 34,31 mm³ belief. Somit ergab sich ein um 21,3 % reduzierter Volumenverschleiß.

Der erfindungsgemäße Werkstoff bzw. das Pulvergemisch kann insbesondere für korrosions- und hochtemperaturbeständige Auftragungen auf Schmiedehämmer und -sättel, sowie als Gemisch auch für Mischerflügel und verschleißfeste Auftragung, insbesondere zum Beispiel Bohrmeißel, benutzt werden.

Durch die erfindungsgemäße Pulvermischung ergeben sich nachstehende Vorteile:
- Höhere Verschleißbeständigkeit gegenüber den bisherigen NiCrBSiWSC60 - Legierungen durch gleichmäßige Karbidverteilung über die gesamte Schichtdicke; die Karbidmenge allein ist nicht ausschlaggebend, insbesondere gegenüber der flammgespritzten Variante
- Dünnere Auftragungen und Schichtdicken durch Laserauftragschweißen können bei gleichzeitiger besserer Anbindung (Aufmischung vorhanden) erzielt werden
- Höhere Korrosionsbeständigkeit durch hohen Mo und Cr Gehalt
- Höhere Temperaturbeständigkeit bis 900°C durch kompletten Legierungswechsel
- Geringere Kosten durch weniger WC Anteil
- Höhere Schlagbeständigkeit durch Kaltverfestigung der Matrix unter Schlägen (Impacts)
- Zähhart bei doch noch höheren Dehnungswerten gegenüber der harten NiCrBSiWSC60 Metallpulvermischung. Dadurch ergibt sich auch ein geringeres Rissrisiko.

Ferner ergibt sich der Vorteil, dass im Vergleich zu dem Metallpulver der Metallpulvermischung NiCrBSIWSC60 die neue Legierung, also der erfindungsgemäße Werkstoff bzw. das erfindungsgemäße Pulver für neue Technologien geeignet ist.

Mit der erfindungsgemäßen Pulvermischung können dünnere als auch dickere Schichten mittels Laser erzeugt werden. Im Plasma-Pulver-Auftragschweißverfahren kann die Pulvermischung auch mehrlagig aufgetragen werden. Dabei gehen gezielt einige Wolframkarbide in Lösung, wodurch eine zusätzliche Aufhärtung der Matrix gegeben ist.

Aufgrund des erfindungsgemäßen Materials kann nicht nur durch Plasma-Pulver- und Laser-Pulver-Auftragschweißen ein umfassendes Schichtdickenspektrum abgedeckt werden, sondern auch die Fertigung von kompletten Bauteilen im 3D-Druckverfahren ist möglich. Ein Einsatz im Fülldrahtbereich - auch für konventionelle oder neue Metallschutzgasschweißverfahren - ist möglich.

## Patentansprüche

1. Werkstoff in Form eines Mischpulvers, das ein erstes Pulver auf Nickel-Basis enthaltend oder bestehend aus in Gew.-% des Werkstoffs
| | |
|---|---|
| C | 0,06 bis 0,20 |
| Si | < 0,8 |
| Mn | 0,5 bis 1,5 |
| Fe | 2,0 bis 3,8 |
| Cr | 14,0 bis 17,0 |
| Mo | 14,0 bis 18,0 |
| W | 3,0 bis 5,5 |
| V | 0,1 bis 0,8 |
| Ni | Rest |
| Cu | < 0,1 |
| B | < 0,05 |
| andere | < 0,5 |
und ein zweites Pulver enthaltend oder bestehend aus Wolframkarbid mit in Gew.-% des Werkstoffs
| | |
|---|---|
| C | 3,5 bis 4,5 |
| Fe | < 0,3 |
| W | Rest |
| andere | < 0,5, |
wobei der Anteil des ersten Pulvers 55 % bis 85 Gew.-% des Werkstoffs beträgt.

2. Werkstoff nach Anspruch 1,
**dadurch gekennzeichnet,**
**dass** der Anteil von Si in Gew.-% des Werkstoffs 0 < Si < 0,8 beträgt.

3. Werkstoff nach zumindest Anspruch 1,
**dadurch gekennzeichnet,**
**dass** der Werkstoff aus dem ersten und dem zweiten Pulver besteht.

4. Werkstoff nach Anspruch 1,
**dadurch gekennzeichnet,**
**dass** der Werkstoff in Gew.-% besteht aus
| | |
|---|---|
| C | 1,6 |
| Si | 0,4 |
| Mn | 0,7 |
| Fe | 1,8 |
| Cr | 9,6 |
| Mo | 9,7 |
| W | 41,1 |
| V | 0,4 |
| Ni | 34,7 |

5. Werkstoff nach zumindest einem der vorgehenden Ansprüche,
**dadurch gekennzeichnet,**
**dass** das aus dem ersten und zweiten Pulver bestehende Pulvergemisch eine Korngröße zwischen 15 und 180 µm aufweist.

6. Werkstoff nach zumindest einem der Ansprüche 1 bis 4,
**dadurch gekennzeichnet,**
**dass** das aus dem ersten und zweiten Pulvergemisch bestehende Pulvergemisch für ein Plasma-Pulver-Auftragschweißen eine Korngröße zwischen 60 und 180 µm, insbesondere zwischen 50 und 150 µm, aufweist.

7. Werkstoff nach zumindest einem der Ansprüche 1 bis 4,
**dadurch gekennzeichnet,**
**dass** das aus dem ersten und zweiten Pulvergemisch bestehende Pulvergemisch für ein Laser-Pulver-Auftragschweißen eine Korngröße zwischen 60 und 180 µm, insbesondere zwischen 50 und 150 µm, insbesondere bevorzugt zwischen 45 und 125 µm, aufweist.

8. Werkstoff nach zumindest einem der Ansprüche 1 bis 4,
**dadurch gekennzeichnet,**
**dass** das aus dem ersten und zweiten Pulvergemisch bestehende Pulvergemisch für ein additives Fertigungsverfahren eine Korngröße zwischen 15 und 90 µm aufweist.

9. Verwendung des Werkstoffs nach einem der Ansprüche 6 oder 7 als Mischpulver zum Auftragschweißen, insbesondere Plasma-Pulver-Auftragschweißen oder Laser-Pulver-Auftragschweißen.

10. Verwendung des Werkstoffs nach Anspruch 8 zur Herstellung eines Objekts mittels einer additiven Fertigung, insbesondere Laserschmelz-Verfahrens.

11. Verfahren zum Auftragen eines Werkstoffs nach einem der Ansprüche 6 und 7 auf ein Objekt mittels Plasma-Pulver- oder Laser-Pulver-Auftragschweißens.

12. Verfahren zur Herstellung eines Bauteils, wobei nacheinander mehrere Pulverschichten des Werkstoffs nach Anspruch 8 übereinander aufgebracht und jede Pulverschicht vom Aufbringen der nächstfolgenden Pulverschicht mit einem fokussierten Laserstrahl in einem vorgegebenen Bereich, der einem ausgewählten Querschnittsbereich des herzustellenden Objekts entspricht, auf eine vorgegebene Temperatur derart erhitzt wird, dass die Pulverschicht an der darunterliegender Pulverschicht durch Aufschmelzen der Pulverschicht und/oder Sintern fixiert wird.

## Claims

1. Material in the form of a powder mix, containing a first powder on a nickel basis or consisting of, in % by weight of the material,
| | |
|---|---|
| C | 0.06 to 0.20 |
| Si | < 0.8 |
| Mn | 0.5 to 1.5 |
| Fe | 2.0 to 3.8 |
| Cr | 14.0 to 17.0 |
| Mo | 14.0 to 18.0 |
| W | 3.0 to 5.5 |
| V | 0.1 to 0.8 |
| Ni | remainder |
| Cu | < 0.1 |
| B | < 0.05 |
| Other | < 0.5 |
and containing a second powder or consisting of tungsten carbide with, in % by weight of the material,
| | |
|---|---|
| C | 3.5 to 4.5 |
| Fe | < 0.3 |
| W | remainder |
| Other | < 0.5, |
the proportion of the first powder being 55 % to 85 % by weight of the material.

2. Material according to claim 1,
**wherein**
the proportion of Si, in % by weight of the material, is 0 < Si < 0.8.

3. Material according to at least claim 1,
**wherein**
the material consists of the first and the second powder.

4. Material according to claim 1,
**wherein**
the material consists, in % by weight, of
| | |
|---|---|
| C | 1.6 |
| Si | 0.4 |
| Mn | 0.7 |
| Fe | 1.8 |
| Cr | 9.6 |
| Mo | 9.7 |
| W | 41.1 |
| V | 0.4 |
| Ni | 34.7 |

5. Material according to at least one of the preceding claims,
**wherein**
the powder mix consisting of the first and the second powder has a grain size between 15 and 180 µm.

6. Material according to at least one of claims 1 to 4,
**wherein**
the powder mix consisting of the first and the second powder for plasma powder deposition welding has a grain size between 60 and 180 µm, in particular between 50 and 150 µm.

7. Material according to at least one of claims 1 to 4,
**wherein**
the powder mix consisting of the first and the second powder for laser powder deposition welding has a grain size between 60 and 180 µm, in particular between 50 and 150 µm, particularly preferably between 45 and 125 µm.

8. Material according to at least one of claims 1 to 4,
**wherein**
the powder mix consisting of the first and the second powder for an additive production method has a grain size between 15 and 90 µm.

9. Use of the material according to one of claims 6 or 7 as a powder mix for deposition welding, in particular plasma powder deposition welding or laser powder deposition welding.

10. Use of the material according to claim 8 for manufacturing an object by means of additive production, in particular a laser melting method.

11. Method for depositing a material according to one of claims 6 and 7 onto an object by means of plasma powder or laser powder deposition welding.

12. Method for manufacturing a component, wherein a plurality of powder layers of the material according to claim 8 are consecutively deposited one on top of the other and each powder layer is heated with a focused laser beam, prior to deposition of the following powder layer, in a specified area corresponding to a selected cross-sectional area of the object to be manufactured, to a specified temperature such that the powder layer is fixed on the powder layer underneath it by melting on of the powder layer and/or by sintering.

## Revendications

1. Matériau sous la forme d'un mélange de poudres contenant une première poudre à base de nickel ou constitué des éléments suivants indiqués en % en poids du matériau
| | |
|---|---|
| C | 0,06 à 0,20 |
| Si | < 0,8 |
| Mn | 0,5 à 1,5 |
| Fe | 2,0 à 3,8 |
| Cr | 14,0 à 17,0 |
| Mo | 14,0 à 18,0 |
| W | 3,0 à 5,5 |
| V | 0,1 à 0,8 |
| Ni | reste |
| Cu | < 0,1 |
| B | < 0,05 |
| autres | < 0,5 |
et contenant une seconde poudre ou constitué de carbure de tungstène avec les éléments suivants indiqués en % en poids du matériau
| | |
|---|---|
| C | 3,5 à 4,5 |
| Fe | < 0,3 |
| W | reste |
| autres | < 0,5 |
sachant que la proportion de la première poudre s'élève à 55 % à 85 % en poids du matériau.

2. Matériau selon la revendication 1,
**caractérisé en ce**
**que** la proportion de Si en % en poids du matériau est telle que 0 < Si < 0,8.

3. Matériau selon au moins la revendication 1,
**caractérisé en ce**
**que** le matériau est constitué de la première et de la seconde poudre.

4. Matériau selon la revendication 1,
**caractérisé en ce**
**que** le matériau est constitué des éléments suivants en % en poids
| | |
|---|---|
| C | 1,6 |
| Si | 0,4 |
| Mn | 0,7 |
| Fe | 1,8 |
| Cr | 9,6 |
| Mo | 9,7 |
| W | 41,1 |
| V | 0,4 |
| Ni | 34,7 |

5. Matériau selon au moins une des revendications précédentes,
**caractérisé en ce**
**que** le mélange de poudres constitué de la première et de la seconde poudre présente une granulométrie comprise entre 15 et 180 µm.

6. Matériau selon au moins une des revendications 1 à 4,
**caractérisé en ce**
**que** le mélange de poudres constitué de la première et de la seconde poudre pour un rechargement par soudage au plasma sous flux en poudre présente une granulométrie comprise entre 60 et 180 µm, notamment entre 50 et 150 µm.

7. Matériau selon au moins une des revendications 1 à 4,
**caractérisé en ce**
**que** le mélange de poudres constitué de la première et de la seconde poudre pour un rechargement par soudage au laser sous flux en poudre présente une granulométrie comprise entre 60 et 180 µm, notamment entre 50 et 150 µm, notamment de préférence entre 45 et 125 µm.

8. Matériau selon au moins une des revendications 1 à 4,
**caractérisé en ce**
**que** le mélange de poudres constitué de la première et de la seconde poudre pour un procédé de fabrication additive présente une granulométrie comprise entre 15 et 90 µm.

9. Utilisation du matériau selon une des revendications 6 ou 7 comme mélange de poudres pour un rechargement par soudage, notamment un rechargement par soudage au plasma sous flux en poudre ou un rechargement par soudage au laser sous flux en poudre.

10. Utilisation du matériau selon la revendication 8,
pour la production d'un objet au moyen d'une fabrication additive, notamment d'un procédé de fusion au laser.

11. Procédé pour appliquer un matériau selon une des revendications 6 et 7 sur un objet au moyen d'un rechargement par soudage au plasma sous flux en poudre ou d'un rechargement par soudage au laser sous flux en poudre.

12. Procédé de fabrication d'un composant, sachant que plusieurs couches de poudre du matériau selon la revendication 8 sont posées successivement les unes sur les autres et qu'avant l'application de la couche suivante, chaque couche de poudre est chauffée à une température prédéfinie avec un rayon laser focalisé dans une zone prédéfinie correspondant à une zone de section transversale sélectionnée de l'objet à fabriquer, de sorte que la couche de poudre est fixée sur la couche de poudre sous-jacente par la fusion de la couche de poudre et/ou par frittage.
